# EUROPEAN PATENT SPECIFICATION

(11) **EP 3 320 030 B1**
(45) Date of publication and mention of the grant of the patent: **30.12.2020**
(21) Application number: 16739650.6
(22) Date of filing: 05.07.2016
(51) Int. Cl.: C08J 7/06, B29C 71/00, B24D 11/00

(54) **ARTICLE AND METHOD OF MAKING THE SAME**
GEGENSTAND UND VERFAHREN ZUR HERSTELLUNG DESSELBEN
OBJET ET SON MÉTHODE DE FABRICATION

(30) Priority: 08.07.2015 US 201562190051 P
(43) Date of publication of application: 16.05.2018
(73) Proprietor: 3M Innovative Properties Company, St. Paul, MN 55133-3427 (US)
(72) Inventor: HAJIME, Evan Koon Lun Yuuji, Saint Paul, Minnesota 55133-3427 (US); CLAPPER, Jason D., Saint Paul, Minnesota 55133-3427 (US); HALVERSON, Kurt J., Saint Paul, Minnesota 55133-3427 (US); KANG, Myungchan, Saint Paul, Minnesota 55133-3427 (US)
(74) Representative: Mathys & Squire
(86) International application number: PCT/US2016/040944
(87) International publication number: WO 2017/007750

(56) References cited:
- WO-A1-94/04356
- WO-A1-2013/053608
- US-A1- 2012 024 505
- US-B2- 8 771 801
- HENG ZHANG ET AL: "Surface Modification Studies of Edge-Oriented Molybdenum Sulfide Nanosheets", LANGMUIR, vol. 20, no. 16, 1 August 2004 (2004-08-01), pages 6914-6920, XP055311337, US ISSN: 0743-7463, DOI: 10.1021/la049887t

## Description

### Background

The alignment or orientation of particle assemblies is a commonly sought after construction for the collective properties they may impart, and many embodiments of aligned or oriented particle assemblies are known. For example, arrays of self-organized, oriented zinc oxide nanowires exhibit room-temperature ultraviolet lasing are reported, for example, in "Room-Temperature Ultraviolet Nanowire Nanolasers," Huang, M.H. et al., Science, 292, pp. 1897-1899 (2001). A forest of vertically aligned single-walled carbon nanotubes behaving most similarly to a black body, absorbing light almost perfectly across a very wide spectral range (0.2-200 micrometers) is reported, for example, in "A Black Body Absorber From Vertically Aligned Single-Walled Carbon Nanotubes," Mizuno, K. et al., Proceedings of the National Academy of Sciences of the United States of America (PNAS), 106 (15), pp. 6044-6047 (2009). A gecko's foot having nearly five hundred thousand keratinous hairs or seta, where each setae contains hundreds of projections terminating in 0.2-0.5 micrometer spatula-shaped structures is reported, for example, in "Adhesive Force of a Single Gecko Foot-Hair," Autumn, K. et al., Nature, 405, pp. 681-685 (2000), where the macroscopic orientation and preloading of the seta increased attachment force 600-fold above that of frictional measurements of the material. Aligned shaped abrasive grains in coated abrasive products are reported, for example, in U.S. Pat. No. 8,685,124 B2 (David et al.).

Methods of making aligned or oriented particle assemblies are also known in the art. For example, vertically aligned single-walled carbon nanotubes (forests) synthesized by water-assisted chemical vapor deposition (CVD) "SuperGrowth" on silicon substrates at 750°C with ethylene as a carbon source and water as a catalyst enhancer and preserver are reported, for example, in "A Black Body Absorber From Vertically Aligned Single-Walled Carbon Nanotubes," Mizuno, K. et al., Proceedings of the National Academy of Sciences of the United States of America (PNAS), 106 (15), pp. 6044-6047 (2009). Edge-oriented MoS₂ nanosheets synthesized by the evaporation of a single source precursor based on Mo(IV)-tetrakis(diethylaminodithiocarbomato) are reported, for example, in "Surface Modification Studies of Edge-Oriented Molybdenum Sulfide Nanosheets," Zhang, H. et al., Langmuir, 20, pp. 6914-6920 (2004). These methods, however, are restricted to thermally stable substrates due to the high temperature processing conditions involved (300°C or higher), and involve the direct growth of the particles from gas or vapor sources.

Alternative methods may include the alignment of pre-formed particles, and may not require high temperatures (300°C or higher) or involve direct growth of particles. For example, a method for applying particles to a backing having a make layer on one of the backing's opposed major surfaces, attaching the particle to the make layer by an electrostatic force is reported, for example, in U.S. Pat. No. 8,771,801 B2 (Moren et al.). Electrostatic flocking used to make vertically aligned, high-density arrays of carbon fibers (CFs) on a planar substrate is reported, for example, in "Elastomeric Thermal Interface Materials With High Through-Plane Thermal Conductivity From Carbon Fiber Fillers Vertically Aligned by Electrostatic Flocking," Uetani, K. et al., Advanced Materials, 26, pp. 5857-5862 (2014). The high voltage discharge during the electrostatic flocking process, however, is a common flocculent ignition hazard, and in general as particle size decreases, explosion severity tends to increase. Fiber flock ignition has been reported, in "Review of the Explosibility of Nontraditional Dusts," Worsfold, S.M. et al., Industrial & Engineering Chemistry Research, 51, pp. 7651-7655 (2012), as the cause of at least one explosion in flock manufacturing plants in recent years.

There is a desire for additional aligned or oriented particle assemblies and methods of making aligned or oriented particle assemblies.

### Summary

In a first aspect, the present disclosure describes an article comprising a polymeric substrate having a first major surface comprising a plurality of two-dimensional particles (e.g., clay particles, graphite particles, boron nitride particles, carbon particles, molybdenum disulfide particles, bismuth oxychloride particles, and combinations thereof) attached thereto, the plurality of particles each having an outer surface and lengths greater than 1 micrometer, wherein for at least 50 percent (in some embodiments, 55, 60, 65, 70, 75, 80, 85, 90, or even at least 95 percent) by number of the particles there is at least 20 (in some embodiments, at least 25, 30, 35, 40, 45, 50, 55, 60, 65, 70, 75, 80, 85, 90, or even at least 95) percent of the respective particle surface area consisting of points having tangential angles in a range from 5 to 175 degrees (in some embodiments, at least tangential angles in a range from 10 to 170, 15 to 165, 20 to 160, 25 to 155, 30 to 150, 35 to 145, 40 to 140, 45 to 135, 50 to 130, 55 to 125, 60 to 120, 65 to 115, 70 to 110, 75 to 105, 80 to 100, or even in a range from 85 to 95 degrees) from the first major surface of the polymeric substrate, wherein the particles have thickness no greater than 300 nm (in some embodiments, no greater than 250 nm, 200 nm, or even no greater than 150 nm; in some embodiments, in a range from 100 nm to 200 nm). The particles can be planar or non-planar.

In articles described herein under said first aspect, the particles may favorably have a largest dimension in a range from 1 micrometer to 50 micrometers (in some embodiments, in a range from 1 micrometer to 25 micrometers, or even 2 micrometers to 15 micrometers).

In articles described herein under said first aspect, favorably at least a portion of the outer surface of the respective particles has a coating thereon (e.g., at least 10 percent, 15 percent, 20 percent, 25 percent, 30 percent, 35 percent, 40 percent, 45 percent, 50 percent, 55 percent, 60 percent, 65 percent, 70 percent, 75 percent, 80 percent, 85 percent, 90 percent, 95 percent, or even at least 100 percent, of the total outer surface of the respective particle) and/or at least a portion of the particles have an outer surface with a coating thereon.

In articles described herein under said first aspect, the article may favorably further comprise a tie layer disposed between the first major surface of the polymeric substrate and the plurality of particles. The tie layer may be a continuous layer or a discontinuous layer.

In articles described herein under said first aspect, the ratio of the particle width to the particle thickness may favorably be at least greater than 2:1 (in some embodiments, at least greater than 5:1, 10:1, 15:1, 20:1, 25:1, 50:1, 75:1, or even at least greater than 100:1).

In articles described herein under said first aspect, the particles may favorably have an aspect ratio of at least greater than 5:1 (in some embodiments, at least greater than 10:1, 15:1, 20:1, 25:1, 50:1, 75:1, 100:1, 250:1, 500:1, 750:1, or even at least greater than 1000:1).

In a second aspect, the present disclosure describes an article comprising a polymeric substrate having a first major surface with a tie (i.e., promotes adhesion, but is not necessarily an adhesive) layer on the first major surface of the polymeric substrate and comprising a plurality of two-dimensional particles (e.g., clay particles, graphite particles, boron nitride particles, carbon particles, molybdenum disulfide particles, bismuth oxychloride particles, and combinations thereof) attached to the tie layer, the particles each having an outer surface, wherein for at least 50 percent (in some embodiments, 55, 60, 65, 70, 75, 80, 85, 90, or even at least 95 percent) by number of the particles there is at least 20 (in some embodiments, at least 25, 30, 35, 40, 45, 50, 55, 60, 65, 70, 75, 80, 85, 90, or even at least 95) percent of the respective particle surface area consisting of points having tangential angles in a range from 5 to 175 degrees (in some embodiments, at least tangential angles in a range from 10 to 170, 15 to 165, 20 to 160, 25 to 155, 30 to 150, 35 to 145, 40 to 140, 45 to 135, 50 to 130, 55 to 125, 60 to 120, 65 to 115, 70 to 110, 75 to 105, 80 to 100, or even in a range from 85 to 95 degrees) from the first major surface of the polymeric substrate. . The particles can be planar or non-planar.

In articles described herein under said second aspect, the particles may favorably have a thickness no greater than 300 nm, 250 nm, 200 nm, or even no greater than 150 nm; in some embodiments, in a range from 100 nm to 200 nm.

In articles described herein under said second aspect, the tie layer may be a continuous layer or a discontinuous layer.

In articles described herein under said second aspect, the tie layer may favorably comprise adhesive.

In articles described herein under said second aspect, the particles may favorably have a largest dimension in a range from 1 micrometer to 50 micrometers (in some embodiments, in a range from 1 micrometer to 25 micrometers, or even 2 micrometers to 15 micrometers).

In articles described herein under said second aspect, favorably at least a portion of the outer surface of the respective particles has a coating thereon (e.g., at least 10 percent, 15 percent, 20 percent, 25 percent, 30 percent, 35 percent, 40 percent, 45 percent, 50 percent, 55 percent, 60 percent, 65 percent, 70 percent, 75 percent, 80 percent, 85 percent, 90 percent, 95 percent, or even at least 100 percent, of the total outer surface of the respective particle).

In articles described herein under said second aspect, the ratio of the particle width to the particle thickness may favorably be at least greater than 2:1 (in some embodiments, at least greater than 5:1, 10:1, 15:1, 20:1, 25:1, 50:1, 75:1, or even at least greater than 100:1).

In articles described herein under said second aspect, wherein the particles may favorably have an aspect ratio of at least greater than 5:1 (in some embodiments, at least greater than 10:1, 15:1, 20:1, 25:1, 50:1, 75:1, 100:1, 250:1, 500:1, 750:1, or even at least greater than 1000:1).

In a third aspect, the present disclosure describes an article comprising a polymeric substrate having a first major surface comprising a plurality of at least one of two-dimensional clay particles, two-dimensional graphite particles, two-dimensional boron nitride particles, two-dimensional carbon particles, two-dimensional molybdenum disulfide particles, or two-dimensional bismuth oxychloride particles attached to the first major surface of the polymeric substrate, the particles each having an outer surface, wherein for at least 50 percent (in some embodiments, 55, 60, 65, 70, 75, 80, 85, 90, or even at least 95 percent) by number of the particles there is at least 20 (in some embodiments, at least 25, 30, 35, 40, 45, 50, 55, 60, 65, 70, 75, 80, 85, 90, or even at least 95) percent of the respective particle surface area consisting of points having tangential angles in a range from 5 to 175 degrees (in some embodiments, at least tangential angles in a range from 10 to 170, 15 to 165, 20 to 160, 25 to 155, 30 to 150, 35 to 145, 40 to 140, 45 to 135, 50 to 130, 55 to 125, 60 to 120, 65 to 115, 70 to 110, 75 to 105, 80 to 100, or even in a range from 85 to 95 degrees) from the first major surface of the polymeric substrate. In some embodiments, the particles have thickness no greater than 300 nm, 250 nm, 200 nm, or even no greater than 150 nm; in some embodiments, in a range from 100 nm to 200 nm. The particles can be planar or non-planar.

In articles described herein under said third aspect, the particles may favorably have a thickness no greater than 300 nm, 250 nm, 200 nm, or even no greater than 150 nm; in some embodiments, in a range from 100 nm to 200 nm.

In articles described herein under said third aspect, the ratio of the particle width to the particle thickness may favorably be at least greater than 2:1 (in some embodiments, at least greater than 5:1, 10:1, 15:1, 20:1, 25:1, 50:1, 75:1, or even at least greater than 100:1).

In articles described herein under said third aspect, the particles may favorably have a largest dimension in a range from 1 micrometer to 50 micrometers (in some embodiments, in a range from 1 micrometer to 25 micrometers, or even 2 micrometers to 15 micrometers).

In articles described herein under said third aspect, favorably at least a portion of the outer surface of the respective particles has a coating thereon (e.g., at least 10 percent, 15 percent, 20 percent, 25 percent, 30 percent, 35 percent, 40 percent, 45 percent, 50 percent, 55 percent, 60 percent, 65 percent, 70 percent, 75 percent, 80 percent, 85 percent, 90 percent, 95 percent, or even at least 100 percent, of the total outer surface of the respective particle) and/or at least a portion of the particles have an outer surface with a coating thereon.

In articles described herein under said third aspect, the article may favorably further comprise a tie layer disposed between the first major surface of the polymeric substrate and the plurality of particles. The tie layer may be a continuous layer or a discontinuous layer.

In articles described herein under said third aspect, the particles may have an aspect ratio of at least greater than 5:1 (in some embodiments, at least greater than 10:1, 15:1, 20:1, 25:1, 50:1, 75:1, 100:1, 250:1, 500:1, 750:1, or even at least greater than 1000:1).

In another aspect, the present disclosure describes a method of orienting particles, the method comprising:
applying a plurality of particles (e.g., clay particles, graphite particles, boron nitride particles, carbon particles, molybdenum disulfide particles, bismuth oxychloride particles, and combinations thereof) having an aspect ratio of at least greater than 2:1 (in some embodiments, at least greater than 5:1, 10:1, 15:1, 20:1, 25:1, 50:1, 75:1, 100:1, 250:1, 500:1, 750:1, or even at least greater than 1000:1) to a major surface of a polymeric substrate (e.g., heat shrinkable film, elastomeric film, elastomeric fibers, or heat shrinkable tubing) to provide a coating on the major surface of the polymeric substrate, the coating comprising the plurality of particles where the particles each independently have an acute angle from the major surface of the polymeric substrate; and
dimensionally relaxing (e.g., via heating, via removing tension) the coated polymeric substrate, whereupon relaxing, at least 50 percent (in some embodiments, 55, 60, 65, 70, 75, 80, 85, 90, or even at least 95 percent) by number of the particles changing the acute angle away from the first major surface of the polymeric substrate by at least greater than 5 (in some embodiments, at least greater than 10, 15, 20, 25, 30, 35, 40, 45, 50, 55, 60, 65, 70, 75, 80, or even at least greater than 85) degrees. In some embodiments, the particles have thickness no greater than 300 nm, 250 nm, 200 nm, or even no greater than 150 nm; in some embodiments, in a range from 100 nm to 200 nm. In some embodiments, the method provides an article described herein. In some embodiments the particles are one- or two-dimensional particles. The particles can be planar or non-planar.

In methods described herein, the coated polymeric substrate may favorably have an original length and is dimensionally relaxed in at least one dimension by at least 20 (in some embodiments, at least 25, 30, 40, 50, 60, 70, or even at least 80) percent of the original length.

In methods described herein, the particles may favorably have a largest dimension in a range from 1 micrometer to 50 micrometers (in some embodiments, in a range from 1 micrometer to 25 micrometers, or even 2 micrometers to 15 micrometers).

In methods described herein, favorably wherein at least a portion of the outer surface of the respective particles has a coating thereon (e.g., at least 10 percent, 15 percent, 20 percent, 25 percent, 30 percent, 35 percent, 40 percent, 45 percent, 50 percent, 55 percent, 60 percent, 65 percent, 70 percent, 75 percent, 80 percent, 85 percent, 90 percent, 95 percent, or even at least 100 percent, of the total outer surface of the respective particle) and/or at least a portion of the particles has an outer surface with a coating thereon.

In methods described herein, favorably a tie layer is disposed between the first major surface of the polymeric substrate and the plurality of particles. The tie layer may be a continuous layer or a discontinuous layer.

In methods described herein, the particles may favorably have a thickness no greater than 300 nm, 250 nm, 200 nm, or even no greater than 150 nm; in some embodiments, in a range from 100 nm to 200 nm.

In methods described herein, the ratio of the particle width to the particle thickness may favorably be at least greater than 2:1 (in some embodiments, at least greater than 5:1, 10:1, 15:1, 20:1, 25:1, 50:1, 75:1, or even at least greater than 100:1).

In this application:
"Aspect ratio" is the ratio of the longest dimension of a particle to the shortest dimension of the particle.

"Tangential angle" refers to the angle between the tangent plane at any given point on the outer surface of a particle and the major surface of the substrate to which the particle is attached, wherein the majority by volume of the particle itself is excluded within this angle.

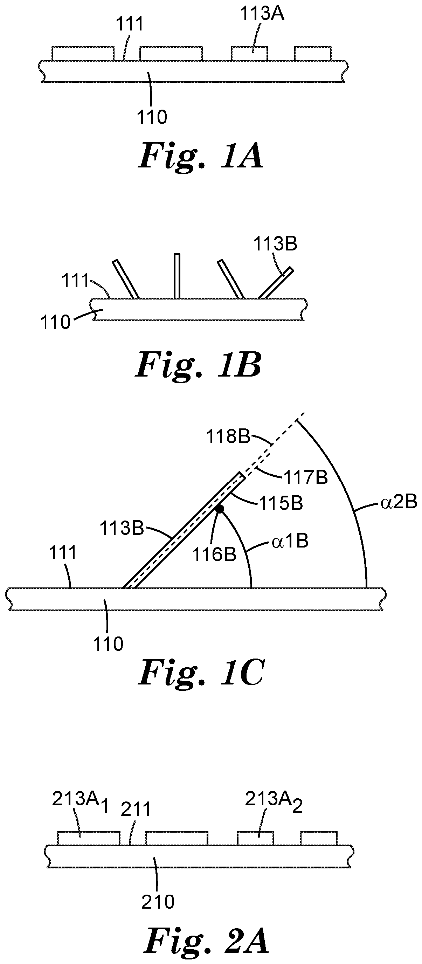

Referring to FIG. 1C, particle 113B is attached to first major surface 111 of a dimensionally relaxed polymeric substrate 110. Tangent plane 117B is the plane tangent to point 116B on outer surface 115B of particle 113B. Tangential angle, α1B, at point 116B is the angle from tangent plane 117B to first major surface 111 of polymeric substrate 110 excluding the majority of particle 113B within the angle. Tangential angle, α1B, can be in a range from 5 degrees to 175 degrees from first major surface 111 of polymeric substrate 110. Basal plane 118B is the plane orthogonal to thickness and bisecting thickness of particle 113B. Acute angle, α2B, of particle 113B is the angle from the basal plane 118B to first major surface 111 of polymeric substrate 110.

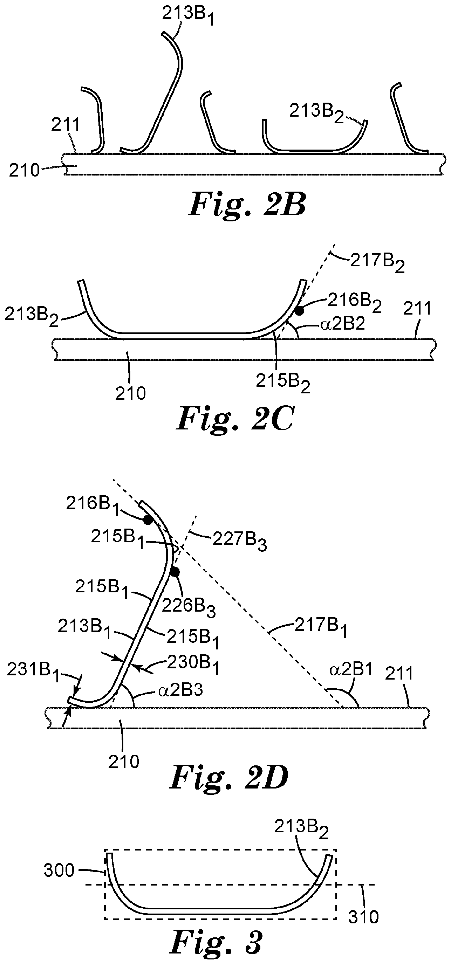

Referring to FIG. 2C, particle 213B₂ is attached to first major surface 211 of polymeric substrate 210. Tangent plane 217B₂ is the plane tangent to point 216B₂ on surface 215B₂ of particle 213B₂. Tangential angle, α2B2, at point 216B₂ is the angle from tangent plane 217B₂ to first major surface 211 of polymeric substrate 210 excluding the majority of particle 213B₂ within the angle. Tangential angle, α2B2, can be in a range from 5 degrees to 175 degrees from first major surface 211 of polymeric substrate 210.

Referring to FIG. 2D, particle 213B₁ is attached to first major surface 211 of polymeric substrate 210. Tangent plane 217B₁ is the plane tangent to point 216B₁ on surface 215B₁ of particle 213B₁. Tangential angle, α2B1, at point 216B₁ is the angle from tangent plane 217B₁ to first major surface 211 of polymeric substrate 210, and is an example of a tangent angle including a portion of a particle, but not a majority of the particle (i.e., excludes the majority of particle within the angle). Tangent plane 227B₃ is the plane tangent to point 226B₃ on surface 215B₁ of particle 213B₁. Tangential angle, α2B3, at point 226B₃ is the angle from tangent plane 227B₃ to first major surface 211 of polymeric substrate 210 excluding the majority of particle 213B₁ within the angle. Tangential angles, α2B1 and α2B3, can independently be in a range from 5 degrees to 175 degrees from first major surface 211 of polymeric substrate 210. Two thicknesses of particle 213B₁ are shown as 230B₁ and 231B₁.

A "two-dimensional particle" refers to particles having a length, width, and thickness, wherein the width is not greater than the length, wherein the width is greater than the thickness, and wherein the length is at least two times the thickness. For particles having a variable thickness, the thickness of the particle is determined as the largest value of thickness. For a non-planar particle, the box length, box width, and box thickness of a particle, defined as the length, width, and thickness of the minimum (volume) bounding box of the particle, is used to determine if a particle is "two-dimensional," wherein the box width is not greater than the box length, wherein the box width is greater than the box thickness, and wherein the box length is at least two times the box thickness. In some embodiments, the length is greater than the width. In some embodiments, the length is at least 2, 3, 4, 5 or even 10 times the width. In some embodiments, the width is at least 2, 3, 4, 5 or even 10 times the thickness. The length of a non-planar particle is taken as the box length of the non-planar particle. The actual thickness(es) of a particle is measured as between points across a thickness of the actual particle as shown, for example, in FIG. 2D as thicknesses 230B₁ and 231B₁.

The "minimum (volume) bounding box" of a particle is a rectangular cuboid having the smallest volume that completely contains the particle, and can be calculated using the "HYBBRID" algorithm described in "Fast oriented bounding box optimization on the rotation group SO(3, R)", Chang, et al., ACM Transactions on Graphics, 30 (5), 122 (2011), the disclosure of which is incorporated herein by reference. The "HYBBRID" (Hybrid Bounding Box Rotation Identification) algorithm approximates the minimal-volume bounding box of a set of points through a combination of two optimization components, namely the genetic algorithm and the Nelder-Mead algorithm. For example, referring to FIG. 3, cross sectional view of (nonplanar) particle 213B₂ in minimal (volume) bounding box 300.

A "one-dimensional particle" refers to particles having a length, width, and thickness, wherein the length is at least two times the width, wherein the thickness is no greater than the width, and wherein the width is less than two times the thickness.

"Acute angle" is the acute angle between the basal plane of a two dimensional particle, or long axis of a one-dimensional particle, and the first major surface of the substrate. If the particle is non-planar, the surfaces of the minimum (volume) bounding box of the particle are used to determine the basal plane of the particle. The basal plane of a particle is the plane orthogonal to the direction of thickness and bisecting the thickness of the particle, for non-planar particles, the thickness of the minimum (volume) bounding box is used.

Generally, embodiments of methods described herein for aligning particles, particularly particles less than millimeters in scale, have relatively high throughput and lower processing temperature than conventional methods. Generally, embodiments of methods described herein for aligning particles also offer more particle composition flexibility than conventional methods, including aligning combustible or explosive particles. Generally, embodiments of methods described herein for aligning particles also enable new constructions of aligned particles.

Articles described herein are useful, for example, for a tamper evident surface.

### Brief Description of the Drawings

FIG. 1A is an exemplary cross-sectional schematic view of particles on an oriented substrate before dimensionally relaxing, where the cross-sectional plane is orthogonal to the width of the particles.
FIG. 1B is an exemplary cross-sectional schematic view of particles on a substrate after dimensionally relaxing, where the cross-sectional plane is orthogonal to the width of the particles.
FIG. 1C is an exemplary cross-sectional schematic view of a particular particle attached to a major surface of a polymeric substrate shown in FIG. 1B, where the cross-sectional plane is orthogonal to the width of the particle.
FIG. 2A is another exemplary cross-sectional schematic view of particles on an oriented substrate before dimensionally relaxing, where the cross-sectional plane is orthogonal to the width of the particles.
FIG. 2B is another exemplary cross-sectional schematic view of particles on a substrate after dimensionally relaxing, where the cross-sectional plane is orthogonal to the width of the particles.
FIG. 2C is another exemplary cross-sectional schematic view of a particular non-planar particle attached to a major surface of a polymeric substrate shown in FIG. 2B, where the cross-sectional plane is orthogonal to the width of the particle.
FIG. 2D is another exemplary cross-sectional schematic view of another particular non-planar particle attached to a major surface of a polymeric substrate shown in FIG. 2B, where the cross-sectional plane is orthogonal to the width of the particle.
FIG. 3 is an exemplary cross-sectional schematic for discussion of a (non-planar) particle 213B₂ in the minimal (volume) bounding box 300, where the cross-sectional plane is orthogonal to the width of the particle and bounding box.
FIG. 4 is a scanning electron microscopy (SEM) image at 5000X of a plan view above the particle coating of EX1 prior to dimensionally relaxing (heating).
FIG. 5 is an SEM image at 1000X of a plan view above the particle coating of EX1 after dimensionally relaxing (heating).
FIG. 6 is an SEM image at 5000X of a plan view above the particle coating of EX2 after dimensionally relaxing.
FIG. 7 is an SEM image at 1500X of a plan view above the particle coating of EX3 after dimensionally relaxing.
FIG. 8 is an SEM image at 5000X of a plan view above the particle coating of EX4, after dimensionally relaxing.
FIG. 9 is an SEM image at 1000X of a plan view above the particle coating of EX5, after dimensionally relaxing.
FIG. 10 is an SEM image at 5000X of a plan view above the particle coating of EX6, after dimensionally relaxing.
FIG. 11 is an SEM image at 5000X of a plan view above the particle coating of EX7, after dimensionally relaxing.
FIG. 12 is an SEM image at 1500X of a plan view above the particle coating of EX8, after dimensionally relaxing.
FIG. 13 is an SEM image at 1000X of a plan view above the particle coating of EX9, after dimensionally relaxing.
FIG. 14 is an SEM image at 5000X of a plan view above the particle coating of EX10, after dimensionally relaxing.
FIG. 15 is an SEM image at 3000X of a plan view above the particle coating of EX11, after dimensionally relaxing.
FIG. 16 is an SEM image at 300X of a plan view above the particle coating of EX12, after dimensionally relaxing.
FIG. 17 is an SEM image at 30X of a plan view above the particle coating of EX13, after dimensionally relaxing.
FIG. 18 is an SEM image at 1000X of a plan view above the particle coating of EX14, after dimensionally relaxing.
FIG. 19 is an SEM image at 2000X of a plan view above the particle coating of EX15, after dimensionally relaxing.
FIG. 20 is an SEM image at 2000X of a plan view above the particle coating of EX16, after dimensionally relaxing.
FIG. 21 is an SEM image at 1000X of a plan view above the particle coating of EX17, after dimensionally relaxing.
FIGS. 22A and 22B are SEM images of plan views above the particle coating of EX18 at 40X and 1000X, respectively, after dimensionally relaxing (heating).

### Detailed Description

Referring to FIG. 1A, particles, including particle 113A, are on first major surface 111 of polymeric substrate 110 before dimensionally relaxing. Referring to FIG. 1B, particles, including particle 113B, are on first major surface 111 of polymeric substrate 110 after dimensionally relaxing.

Referring to FIG. 1C, particle 113B is attached to first major surface 111 of a dimensionally relaxed polymeric substrate 110. Tangent plane 117B is the plane tangent to point 116B on surface 115B of particle 113B. Tangential angle, α1B, at point 116B is the angle from tangent plane 117B to first major surface 111 of polymeric substrate 110 excluding the majority of particle 113B within the angle. Tangential angle, α1B, can be in a range from 5 degrees to 175 degrees from first major surface 111 of polymeric substrate 110. Basal plane 118B is the plane orthogonal to thickness and bisecting the thickness of particle 113B. Acute angle, α2B, of particle 113B is the angle from the basal plane 118B to first major surface 111 of polymeric substrate 110.

Referring to FIG. 2A, particles, including particles 213A₁ and 213A₂, are on first major surface 211 of polymeric substrate 210 before dimensionally relaxing. Referring to FIG. 2B, particles, including particles 213B₁ and 213B₂, are on first major surface 211 of polymeric substrate 210 after dimensionally relaxing the substrate. It is also within the scope of the present disclosure for at least some of particles 213A₁, 213A₂, etc. to be curled (e.g., as shown for particle 213B₂ in FIGS. 2B and 2C) before dimensionally relaxing, and then with dimensionally relaxing, orientate relative to the first major surface of substrate 210 (i.e., after relaxing be oriented, for example, like particle 213B₁ in FIG. 2D). It is also within the scope of the present disclosure for at least some of particles 213A₁, 213A₂, etc. to be curled after dimensionally relaxing without orientating relative to first major surface 211 of substrate 210 (i.e., as shown, for example, for particle 213B₂ in FIGS. 2B and 2C).

Referring to FIG. 2C, particle 213B₂ is attached to first major surface 211 of polymeric substrate 210. Tangent plane 217B₂ is the plane tangent to point 216B₂ on surface 215B₂ of particle 213B₂. Tangential angle, α2B2, at point 216B₂ is the angle from tangent plane 217B₂ to first major surface 211 of polymeric substrate 210 excluding the majority of particle 213B₂ within the angle. Tangential angle, α2B2, can be in a range from 5 degrees to 175 degrees from first major surface 211 of polymeric substrate 210.

Referring to FIG. 2D, particle 213B₁ is attached to first major surface 211 of polymeric substrate 210. Tangent plane 217B₁ is the plane tangent to point 216B₁ on surface 215B₁ of particle 213B₁. Tangential angle, α2B1, at point 216B₁ is the angle from tangent plane 217B₁ to first major surface 211 of polymeric substrate 210 excluding the majority of particle 213B₁ within the angle. Tangent plane 227B₃ is the plane tangent to point 226B₃ on surface 215B₁ of particle 213B₁. Tangential angle, α2B3, at point 226B₃ is the angle from tangent plane 227B₃ to first major surface 211 of polymeric substrate 210 excluding the majority of particle 213B₁ within the angle. Tangential angles, α2B1 and α2B3, can independently be in a range from 5 degrees to 175 degrees from first major surface 211 of polymeric substrate 210. Two thicknesses of particle 213B₁ are shown as 230B₁ and 231B₁.

Referring to FIG. 3, the cross section of the minimal (volume) bounding box 300 contains the cross section of particle 213B₂. Basal plane 310 is the plane orthogonal to box thickness and bisecting the box thickness of particle 213B₂.

Exemplary polymeric substrates include heat shrinkable film, elastomeric film, elastomeric fibers, and heat shrinkable tubing. In general, the substrates possess the property of being dimensionally relaxable, where dimensionally relaxable refers to the property wherein at least one dimension of a material undergoes a reduction in strain during the relaxation process. For example, elastomeric materials in a stretched state are dimensionally relaxable, wherein the relaxation process is the release of stretch or strain in the elastic material. In the case of heat shrink materials, thermal energy is supplied to the material to allow release of the orientation-induced strain in the heat shrink material. Examples of heat shrinkable materials include polyolefins, polyurethanes, polystyrenes, polyvinylchloride, poly(ethylene-vinyl acetate), fluoropolymers (e.g., polytetrafluoroethylene (PTFE), synthetic fluoroelastomer (available, for example, under the trade designation "VITON" from DuPont, Wilmington, DE), polyvinylidenefluoride (PVDF), fluorinated ethylene propylene (FEP)), silicone rubbers, and polyacrylates. Examples of other useful polymeric substrate materials are shape memory polymers such as polyethylene terephthalate (PET), polyethyleneoxide (PEO), poly(1,4-butadien), polytetrahydrofuran, poly(2-methly-2-oxazoline), polynorbornene, and block co-polymers of combinations thereof). Examples of elastomeric materials include natural and synthetic rubbers, fluoroelastomers, silicone elastomers, polyurethanes, and polyacrylates.

In some embodiments of articles described herein a tie layer is disposed between the first major surface of the polymeric substrate and the plurality of particles. In some embodiments the tie layer is continuous layer (i.e., a layer without interruptions). In some embodiments the tie layer is discontinuous layer (i.e., a layer with interruptions). For example, some discontinuous layers have a continuous matrix with openings throughout the layer. Some discontinuous layers comprise a number of discontinuous portions making up the layer (e.g., islands of the tie material).

The tie layer encompasses any number of layers that promote adhesion between the particle layer and the dimensionally changing polymeric substrate. In some embodiments, the layer may be an adhesive such as a curable acrylate, epoxy, or urethane resin. Other examples of tie layers include pressure sensitive adhesive that may further be comprised of materials such as polyacrylates, natural and synthetic rubbers, polyurethanes, latex, and resin modified silicones; meltable film such as a crystalline polyolefin and polyacrylate; and soft materials such as hydrogels of polyacrylates and polyacrylamides. The tie layer may be, for example, a film material with incorporated functional groups to promote adhesion to the polymeric substrate, the particles, or both. Examples of functionalized films include maleated polyethylene such as those available under the trade designation "AC RESINS" from Honeywell, Morrisville, NJ.

The tie layer may be provided by techniques known in the art, including lamination or deposition methods such as solvent coating, hot-melt coating, transfer lamination, curtain coating, Gravure coating, stencil printing, vapor deposition, and aerosol spraying.

Exemplary particles include clay particles, graphite particles, boron nitride particles, carbon particles, molybdenum disulfide particles, bismuth oxychloride particles, and combinations thereof. Suitable clay particles are available, for example, from MakingCosmetics Inc., Snoqualmie, WA. Suitable graphite particles are available, for example, under the trade designation "MICROFYNE" from Asbury Carbons, Asbury, NJ. Suitable boron nitride particles are available, for example, from Aldrich Chemical Co., Inc., Milwaukee, WI. Suitable carbon particles are available, for example, under the trade designation "XGNP-M-5" from XG Sciences, Lansing, MI. Suitable molybdenum disulfide particles are available, for example, under the trade designation "MOLYKOTE Z" from Dow Corning Corp., Midland, MI. Suitable bismuth oxychloride particles are available, for example, from Alfa Inorganics, Beverly, MA.

In some embodiments, the particles have a largest dimension in a range from 1 micrometer to 50 micrometers (in some embodiments, in a range from 1 micrometer to 25 micrometers, or even 2 micrometers to 15 micrometers).

In some embodiments, the particles have thickness no greater than 300 nm (in some embodiments, no greater than 250 nm, 200 nm, or even no greater than 150 nm; in some embodiments, in a range from 100 nm to 200 nm).

In some embodiments, the particles have an aspect ratio of at least greater than 2:1 (in some embodiments, at least greater than 5:1, 10:1, 15:1, 20:1, 25:1, 50:1, 75:1, 100:1, 250:1, 500:1, 750:1, or even at least greater than 1000:1). In some embodiments, for at least 50 percent (in some embodiments, 55, 60, 65, 70, 75, 80, 85, 90, or even at least 95 percent) by number of the particles there is at least 20 (in some embodiments, at least 25, 30, 35, 40, 45, 50, 55, 60, 65, 70, 75, 80, 85, 90, or even at least 95) percent of the respective particle surface area consisting of points having tangential angles in a range from 5 to 175 degrees (in some embodiments, at an angle in a range 10 to 170, 15 to 165, 20 to 160, 25 to 155, 30 to 150, 35 to 145, 40 to 140, 45 to 135, 50 to 130, 55 to 125, 60 to 120, 65 to 115, 70 to 110, 75 to 105, 80 to 100, or even in a range from 85 to 95 degrees) from the first major surface of the polymeric substrate.

In some embodiments, at least a portion of the outer surface of the respective particles has a coating thereon (e.g., at least 10 percent, 15 percent, 20 percent, 25 percent, 30 percent, 35 percent, 40 percent, 45 percent, 50 percent, 55 percent, 60 percent, 65 percent, 70 percent, 75 percent, 80 percent, 85 percent, 90 percent, 95 percent, or even at least 100 percent, of the total outer surface of the respective particle). Exemplary coatings include a fluoropolymer coating used to impart increased wettability of fluorochemical liquids. Fluoropolymer coatings may include, for example, polytetrafluoroethylene (PTFE), polyvinylidene fluoride (PVDF), fluorinated ethylene-propylene (FEP), perfluoroalkoxy polymer (PFA), perfluoroelastomers, etc. The coating may be applied, for example, by spraying a fluoropolymer latex solution onto the particles and allowing the solvent to dry, leaving behind a fluoropolymer coating on the surface of the particles. An example of a fluoropolymer spray that can provide a fluoropolymer coating available, for example, from DuPont under the trade designation "TEFLON NON-STICK DRY FILM LUBRICANT AEROSOL SPRAY." Other coating materials that may be used to impart low energy surfaces include silicones (e.g., silicone oils, silicone greases, silicone elastomers, silicone resins, and silicone caulks). Coatings may be applied through a number of coating, lamination, or deposition methods, including solvent coating, hot-melt coating, transfer lamination, curtain coating, Gravure coating, stencil printing, vapor deposition, and aerosol spraying.

The polymeric substrate having the plurality of particles thereon can be dimensionally relaxed, for example, via heating and/or removing tension where at least 50 percent (in some embodiments, 55, 60, 65, 70, 75, 80, 85, 90, or even at least 95 percent) by number of the particles changing the acute angle away from the first major surface by at least greater than 5 (in some embodiments, at least greater than 10, 15, 20, 25, 30, 35, 40, 45, 50, 55, 60, 65, 70, 75, 80, or even at least greater than 85). For example, pre stretched elastomeric substrates can be relaxed by releasing the tension holding the substrate in the stretched state. In the case of heat shrinkable substrates, the substrates may be placed, for example, in a heated oven or heated fluid until the desired reduction in dimension is achieved.

In some embodiments, the coated substrate has an original length and is dimensionally relaxed in at least one dimension by at least 20 (in some embodiments, at least 25, 30, 40, 50, 60, 70, or even at least 80) percent of the original length. Higher percent changes of original length upon dimensional relaxation typically produce greater changes in orientation angle of the particles with the substrate after relaxation.

Articles described herein are useful, for example, for a tamper evident surface (e.g., where slight pressure on the surface of, for example, an oriented, graphite coated elastomeric film, would change the visual appearance of the film where pressure was applied due to the flattening of the platelets).

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Materials

| Designation | Description |
|---|---|
| PO Heat Shrink Film | Polyolefin (PO) heat shrink film, 25 micrometer, shrink ratio ∼4.37:1, (obtained from Sealed Air, Elmwood Park, NJ, under trade designation "CRYOVAC D-955") was laminated to a 3 mil (75 micrometer) polyethylene terephthalate (PET) film with a thin film of latex emulsion pressure sensitive adhesive (PSA) to form a multilayer film that is easier to handle. The PO heat shrink film layer was peeled away from the PSA/PET film prior to heating. |
| PVC Heat Shrink Film | Polyvinyl chloride (PVC)-based heat shrink film cut from a PVC heat shrink bag (shrink ratio ∼2:1, 100 gauge; obtained as Model S-3550, from ULINE, Hudson, WI). |
| Elastic Latex Film | Elastic latex film (obtained from The Hygenic Corporation, Akron, OH, under trade designation "THERABAND"). The film was stretched uniaxially at ∼2.5:1 ratio prior to taping onto the aluminum plate for subsequent coating. |
| Boron Nitride | Boron nitride (∼1 micrometer particle size; 99%, Lot#: 13422DG; obtained from Aldrich Chemical Co., Inc., Milwaukee, WI). |
| Microfyne Graphite | Graphite powder (-325 mesh; Lot#: SW7797Q; obtained from Asbury Carbons, Asbury, NJ, under trade designation "MICROFYNE"). |
| Graphite Flake #2 | Graphite flake #2 (+200 mesh; Lot#: SW9310; obtained from Asbury Carbons). |
| xGnP-C300 | Graphene nanoplatelets (Serial#: NM121212; obtained from XG Sciences, Lansing, MI, under trade designation "XGNP-C300"). |
| xGnP-M-5 | Graphene nanoplatelets (Serial#: S111611/111811; obtained from XG Sciences, Lansing, MI, under trade designation "XGNP-M-5"). |
| Bismuth oxychloride | Bismuth oxychloride (Stock# 17102; obtained from Alfa Inorganics, Beverly, MA). |
| Molykote Z | 100% MoS₂ powder (Lot#: 0130437924; obtained from Dow Corning Corp., Midland, MI, under trade designation "MOLYKOTE Z"). |
| Panex 35 | Milled Carbon Fiber (150 micrometers; Lot#: 2M13222; obtained from Zoltek Corp., St. Louis, MO, under trade designation "PANEX 35"). |
| EG 3772 | Expandable Graphite (Lot# 726853; obtained from Anthracite Industries, Inc., Sunbury, PA, under the trade designation "EXPANDABLE GRAPHITE (EG) 3772"). |
| Mica | Mica powder (>98%, <15 micrometers particle size; Lot# 07220801; obtained from MakingCosmetics Inc., Snoqualmie, WA). |
| Molykote D-321 R | Anti-friction coating spray that contained MoS₂ (10-30 wt.%) and graphite (<10 wt.%) (obtained from Dow Corning Corp., Midland, MI, under trade designation "MOLYKOTE D-321 R"). |

### Methods

### Method for Polishing of Particles on Substrates

The polymeric substrates used in the following examples possessed a dimensionally "strained state" (e.g., pre-stretched state for heat shrink substrate or actively stretched state for elastic substrates) and dimensionally "relaxed state" (e.g., state after heating for heat shrink substrate or after releasing tension for elastic substrates). All substrates were used as received unless otherwise noted in the following Examples (e.g., where pressure sensitive adhesive (PSA) coatings might be applied prior to particle coating).

In the case of heat shrink film substrates, the films in their "strained state" were taped using a transparent tape (obtained from 3M Company, St. Paul, MN, under trade designation "3M SCOTCH 600 TRANSPARENT TAPE") along each edge onto an aluminum metal plate such that a smaller exposed region of the base substrate was available for coating of the particles.

Elastic latex film substrates were actively stretched prior to securing with tape in order to achieve the "strained state" of the film.

The edge-taped substrates were then lightly coated with a sprinkling of an excess amount of particles. Excess amount of particles, in this context, refers to an amount that produces uncoated particles after the polishing process. The coating particles were then polished onto the entire exposed region of the substrates using a foam pad-based polishing tool (obtained from Meguiar's Inc., Irvine, CA, under the trade designation "MEGUIAR'S G3500 DA POWER SYSTEM TOOL) and polishing pads (obtained from Meguiar's Inc., under the trade designation "G3508 DA POLISHING POWER PADS") attached to an air motor (obtained from GAST Benton Harbor, MI, under the trade designation "GAST MODEL 1AM-NCC-12"). The particles were polished onto the substrate for less than 1 minute at an unloaded speed of about 1600 rotations per minute (RPM). Compressed air was then used to remove residual, uncoated particles prior to removal of the tape at each edge of the film.

### Method for Dimensionally Relaxing Coated Substrates

In the case of elastic coated substrates, dimensional relaxing was inherent in removal of the tape holding the substrate in the "strained state" during polishing. In the case of heat shrink substrates, small pieces of the coated substrates from the above polishing step were cut with a pair of scissors and heated to convert to their "relaxed states". Unless otherwise noted, for heat shrink films, the coated films were placed (coated side up) between two polytetrafluoroethylene (PTFE) mesh screens and placed in a preheated oven at 145°C (air temperature) for about 45 seconds before rapidly removing and cooling to about 40°C within 1 minute. For Examples 15 and 16, the coated films were heated at 104°C and 120°C for 2 minutes, respectively. The shrunken samples were notably thicker, while simultaneously smaller in the long dimensions (the extent depending on the shrink ratio of the specific substrate films used). The coated substrate in Example 14 was heated by immersing the coated substrate into glycerol heated to 127°C for 10 seconds before immediately cooling and washing in a deionized water bath.

### Method for Applying Adhesive Tie Laver

In some Examples an adhesive tie layer was applied on the surface of substrates to be polished with particles. The pressure sensitive adhesive (PSA) used as the adhesive tie layer was prepared as follows: 171 grams of 2-ethylhexyl acrylate (2-EHA) (obtained from BASF, Florham Park, NJ), 9 grams of acrylic acid (AA) (obtained from Alfa Aesar, Ward Hill, MA), 0.08 gram of isooctylthioglycolate (Aldrich, Milwaukee, WI), 0.18 gram of 2,2'-Azobis(2-methylbutyronitrile) (obtained from DuPont Chemicals Company, Wilmington, DE, under the trade designation "VAZO-67"), and 270 grams of ethyl acetate (obtained from VWR International, Radnor, PA) were charged to a 1 liter glass bottle. The bottle was purged with a slow stream of nitrogen using a dip tube assembly for approximately 5 minutes. The bottle was then sealed and placed in a rack apparatus that is rotated through a water bath (obtained from SDL Atlas, Rock Hill, SC, under the trade designation "LAUNDR-OMETER") set at 60°C for 22 hours to polymerize. The T_{g} of the resulting PSA was approximately -25°C as measured by Differential Scanning Calorimetry (DSC) and -10°C by Dynamic Mechanical Analysis (DMA).

The stock PSA polymer solution of 95:5 wt. ratio 2-EHA/AA at 40 wt.% solids in ethyl acetate was further diluted to 1%, 10%, and 20% wt. solids accordingly. The PSA coatings were prepared via the draw down method using a wire-wound size #8 Meyer rod, unless otherwise noted. Only two opposing edges of the base substrate film were taped during draw down in order to eliminate the effect of the tape thickness on the resulting liquid film produced. After air drying for several minutes the remaining two film edges were taped prior to heating the aluminum plate in a preheated oven at 60°C for about 5 minutes. The resulting PSA-coated substrate was then polished with particles as described above.

### Method for Scanning Electron Microscopy

Images were obtained using a scanning electron microscope (SEM) (obtained from JEOL Inc., Tokyo, Japan, under the trade designation "JOEL BENCH TOP SEM"). A 45° angle mount (obtained from Ted Pella, Inc., Redding, CA, under trade designation "PELCO SEMCLIP 45/90° MOUNT" (#16357-20)) was used for mounting samples in the SEM. A small piece of conductive carbon tape (obtained from 3M Company under trade designation "3M TYPE 9712 XYZ AXIS ELECTRICALLY CONDUCTIVE DOUBLE SIDED TAPE") was placed at the top of the 45° angle surface of the mount, and samples were mounted by affixing a small piece of the film/tube onto the carbon tape. If possible, the sample piece was situated as close to the top edge of the 45° angle surface as possible. A small amount of silver paint (obtained from Ted Pella, Inc., Redding, CA, under trade designation "PELCO CONDUCTIVE LIQUID SILVER PAINT" (#16034)) was then applied to a small region of each sample piece, and extended to contact either the carbon tape, aluminum mount surface or both. After briefly allowing the paint to air dry at room temperature, the mounted sample assembly was placed into a sputter/etch unit (obtained from Denton Vacuum, Inc., Moorestown, NJ, under the trade designation "DENTON VACUMM DESK V") and the chamber evacuated to ∼0.04 Torr. Argon gas was then introduced into the sputtering chamber until the pressure stabilized at ∼0.06 Torr before initiating the plasma and sputter coating gold onto the assembly for 90-120 seconds at -30 mA.

### Examples 1-18 (EX1-EX18)

EX1-EX18 samples were prepared by polishing substrates in their "dimensionally strained" states and then dimensionally relaxing them using the methods described above. In some Examples, the substrates were first coated with an adhesive tie layer before the polishing step. Once the substrates were dimensionally relaxed, the resulting substrates with coatings thereon were examined using the SEM as described above. Table 1, below, summarizes the substrates, coating particles and the adhesive tie layer (if any) used for preparing EX1-EX18 samples.

**Table 1**

| Example | Substrate | Coating Particle | Adhesive Tie Layer | Shrink Temp | Heat Time |
|---|---|---|---|---|---|
| EX1 | PO heat shrink film | Boron Nitride | None | 145°C | 45 sec |
| EX2 | PO heat shrink film | Microfyne Graphite | None | 145°C | 45 sec |
| EX3 | PO heat shrink film | Graphite Flake #2 | None | 145°C | 45 sec |
| EX4 | PO heat shrink film | xGnP-C300 | None | 145°C | 45 sec |
| EX5 | PO heat shrink film | xGnP-M-5 | None | 145°C | 45 sec |
| EX6 | PO heat shrink film | Bismuth Oxychloride | None | 145°C | 45 sec |
| EX7 | PO heat shrink film | Molykote Z | None | 145°C | 45 sec |
| EX8 | PO heat shrink film | Microfyne Graphite | 1% PSA | 145°C | 45 sec |
| EX9 | PO heat shrink film | Microfyne Graphite | 20% PSA | 145°C | 45 sec |
| EX10 | PVC heat shrink film | Microfyne Graphite | None | 145°C | 45 sec |
| EX11 | Elastic film (∼2.5:1) | Microfyne Graphite | None | - | - |
| EX12 | PO heat shrink film | Panex 35 fibers | 10% PSA | 145°C | 45 sec |
| EX13 | PO heat shrink film | EG 3772 | 5% PSA, #4 rod | 145°C | 120 sec |
| EX14 | PO heat shrink film | Mica | 20% PSA | 127°C | 10 sec |
| EX15 | PO heat shrink film | Microfyne Graphite | None | 104°C | 120 sec |
| EX16 | PO heat shrink film | Microfyne Graphite | None | 120°C | 120 sec |

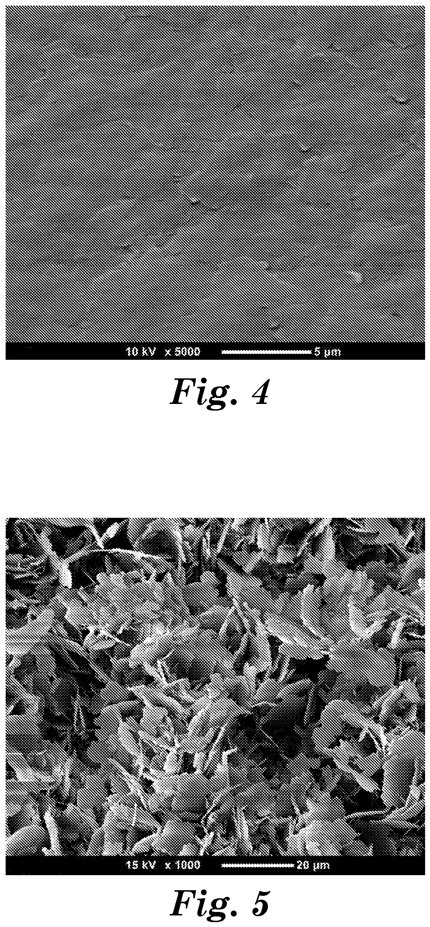

FIG. 4 is a scanning electron microscopy (SEM) image at 5000X of EX1 prior to dimensionally relaxing (heating). The majority of particles coated on the substrate had basal planes substantially parallel to the first major surface of the substrate prior to dimensionally relaxing.

FIG. 5 is an SEM image at 1000X of EX1 after dimensionally relaxing (heating). For EX1, a majority of the particles coated on the substrate had basal planes oriented at an angle relative to the first major surface of the substrate after dimensionally relaxing and reducing the length and width of the substrate by 77% of the original length and width of the substrate.

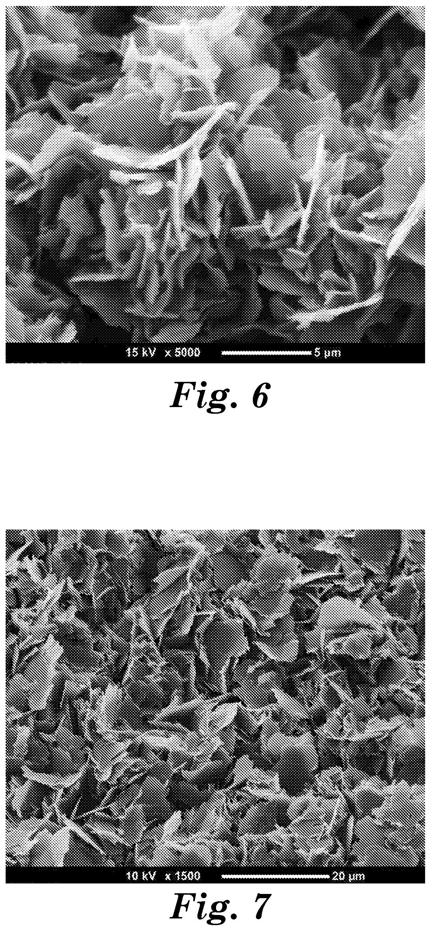

FIGS. 6-20 are SEM images at the magnifications noted on the images of EX2-EX16, respectively, after dimensionally relaxing.

Referring to FIGS. 6 and 7, a majority of graphite particles coated on substrates in EX2 and EX3, respectively, had basal planes oriented at an angle relative to the first major surface of the substrate after dimensionally relaxing and reducing the length and width of the substrate by 77% of the original length and width of the substrate.

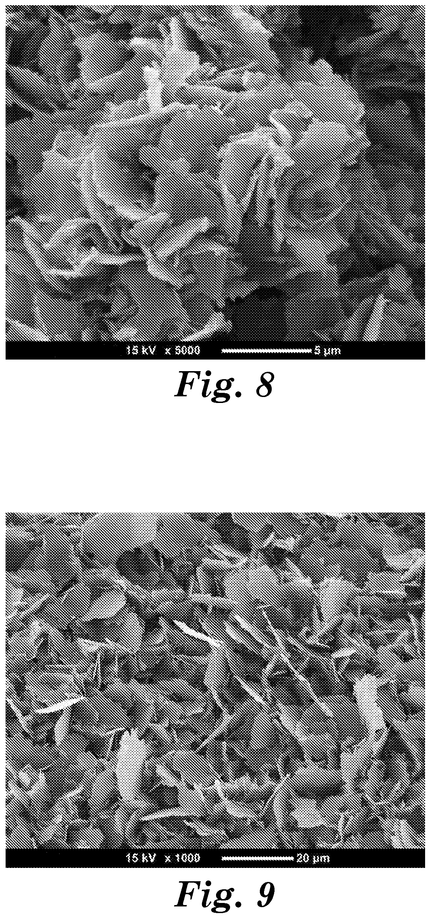

Referring to FIGS. 8 and 9, a majority of carbon (graphene nanoplatelets) particles coated on substrates in EX4 and EX5, respectively, had basal planes oriented at an angle relative to the first major surface of the substrate after dimensionally relaxing and reducing the length and width of the substrate by 77% of the original length and width of the substrate.

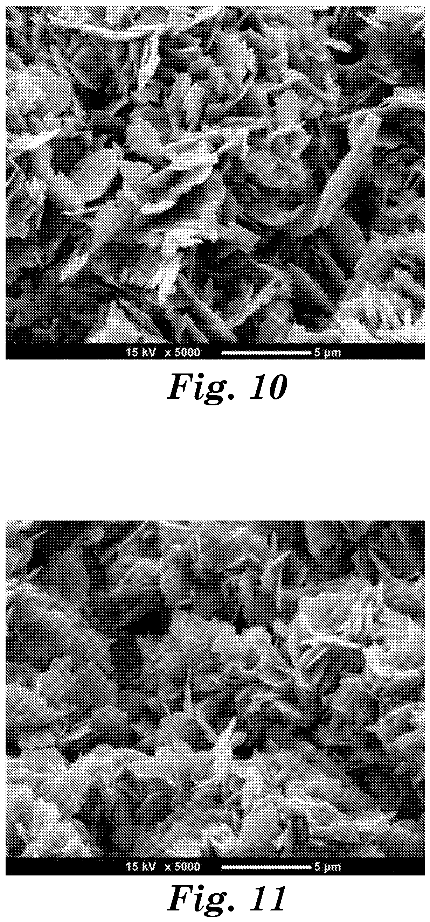

Referring to FIG. 10, a majority of bismuth oxychloride particles coated on the substrate in EX6 had basal planes oriented at an angle relative to the first major surface of the substrate after dimensionally relaxing and reducing the length and width of the substrate by 77% of the original length and width of the substrate.

Referring to FIG. 11, a majority of molybdenum disulfide particles coated on the substrate in EX7 had basal planes oriented at an angle relative to the first major surface of the substrate after dimensionally relaxing and reducing the length and width of the substrate by 77% of the original length and width of the substrate.

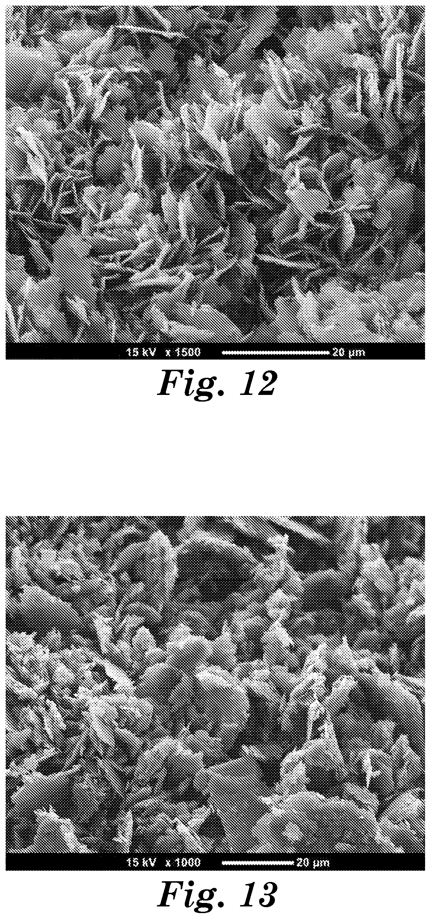

Referring to FIGS. 12 and 13, a majority of graphite particles coated on substrates had adhesive tie layers in EX8 and EX9, respectively, had basal planes oriented at an angle relative to the first major surface of the substrate after dimensionally relaxing and reducing the length and width of the substrate by 77% of the original length and width of the substrate.

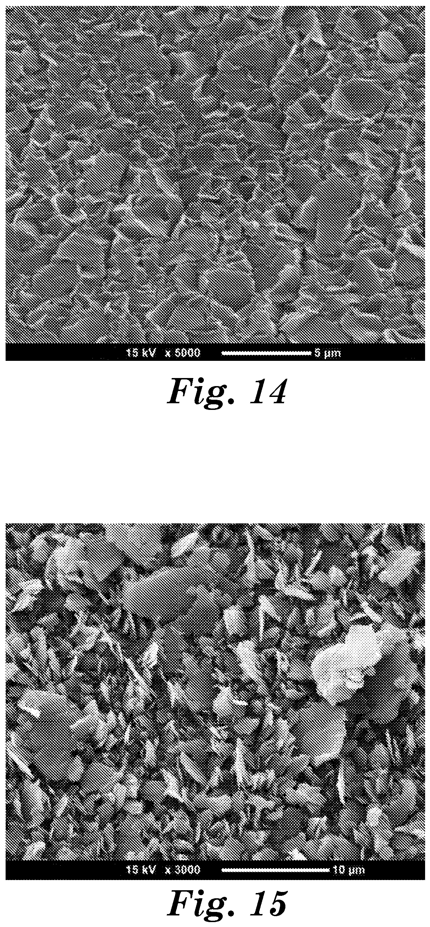

Referring to FIG. 14, a majority of graphite particles coated on the substrate in EX10 had curled edges relative to the first major surface of the substrate after dimensionally relaxing and reducing the length and width of the substrate by 50% of the original length and width of the substrate.

Referring to FIG. 15, a majority of graphite particles coated on the elastic substrate in EX11 had basal planes oriented at an angle relative to the first major surface of the substrate after dimensionally relaxing and reducing the length of the substrate by 60% of the original length of the substrate.

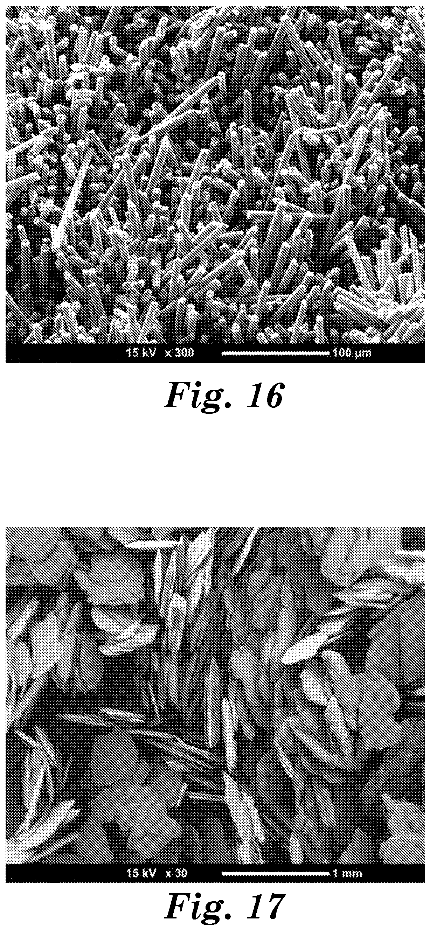

Referring to FIG. 16, a majority of carbon (fiber) particles coated on the substrate had an adhesive tie layer in EX12 had long axes oriented at an angle relative to the first major surface of the substrate after dimensionally relaxing and reducing the length and width of the substrate by 77% of the original length and width of the substrate.

Referring to FIG. 17, a majority of carbon (expandable graphite) particles coated on the substrate had an adhesive tie layer in EX13 had basal planes oriented at an angle relative to the first major surface of the substrate after dimensionally relaxing and reducing the length and width of the substrate by 77% of the original length and width of the substrate.

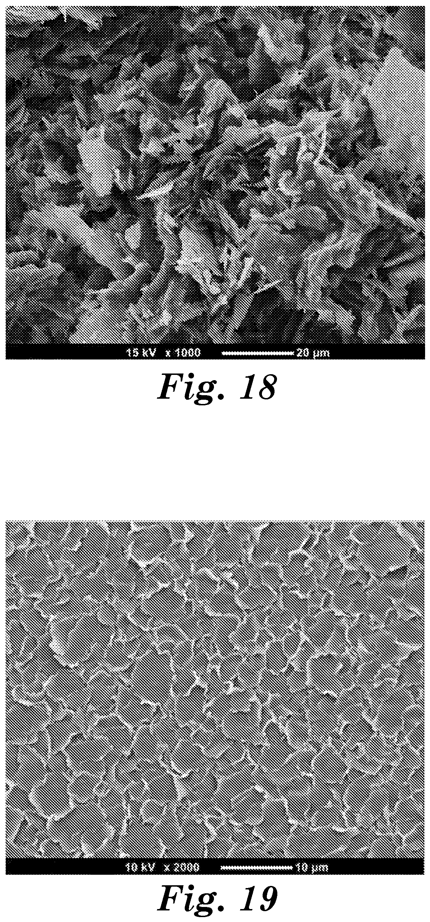

Referring to FIG. 18, a majority of clay (mica) particles coated on the substrate had an adhesive tie layer in EX14 had basal planes oriented at an angle relative to the first major surface of the substrate after dimensionally relaxing by heating in glycerol and reducing the length and width of the substrate by 77% of the original length and width of the substrate.

Referring to FIG. 19, a majority of graphite particles coated on the substrate in EX15 had curled edges relative to the first major surface of the substrate after dimensionally relaxing and reducing the length and width of the substrate by 23% of the original length and width.

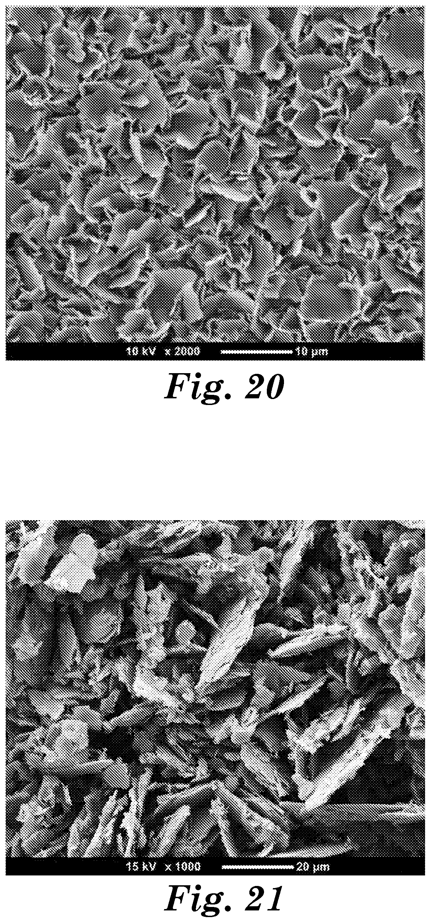

Referring to FIG. 20, a majority of graphite particles coated on the substrate in EX16 had cured edges and oriented basal planes relative to the first major surface of the substrate after dimensionally relaxing and reducing the length and width of the substrate by 56% of the original length and width of the substrate.

### Example 17 (EX17)

EX17 was prepared by spray coating an anti-friction material ("MOLYKOTE D-321R") onto polyolefin heat shrink film and allowing it to dry in air at 22°C for 24 hours. After drying, a thick, brittle particle film on the polyolefin heat shrink film surface was easily fractured and removed prior to heating, leaving behind a thin particle coating on the surface of the polyolefin heat shrink film. A small piece of coated film was placed (coated side down) between two PTFE mesh screens and placed in a preheated oven at 145°C (air temperature) for about 120 seconds before rapidly removing and cooling to about 40°C within 1 minute. The resulting top surface of the shrunken, coated film is shown in an SEM image at 1000X magnification in FIG. 21.

Referring to FIG. 21, a majority of molybdenum disulfide and graphite particles coated on the substrate in EX17 had basal planes oriented at an angle relative to the first major surface of the substrate after dimensionally relaxing and reducing the length and width of the substrate by 77% of the original length and width of the substrate.

### Example 18 (EX18)

EX18 was prepared in the same manner as EX2 as described above except that "3M" was written by hand using a permanent marker (obtained from Newell Rubbermaid, Inc., Freeport, IL, under trade designation "SHARPIE TWIN TIP") on the uncoated PO heat shrink film substrate by hand prior to coating the substrate with graphite flakes ("MICROFYNE"). After polishing, the coated substrate was washed with ethanol repeatedly to remove the permanent marker ink. The graphite flakes that were directly on the substrate remained intact while the graphite flakes on the ink were removed. The coated film was then dimensionally relaxed at 145°C for 45 seconds to prepare EX18 sample.

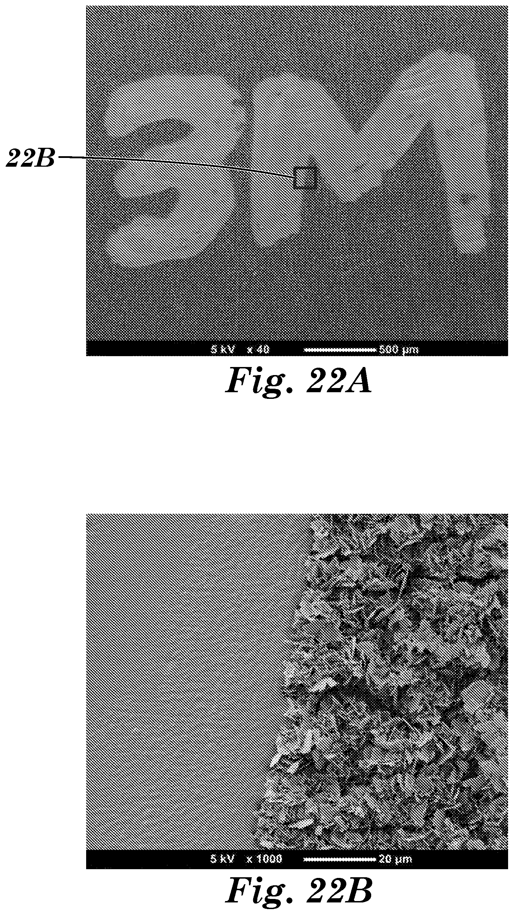

FIGS. 22A and 22B are SEM images of EX18 at 40X and 1000X magnification, respectively, after dimensionally relaxing (heating). Referring to FIGS. 22A and 22B, a majority of graphite particles coated on the substrate in EX18 had basal planes oriented at an angle relative to the first major surface of the substrate after dimensionally relaxing and reducing the length and width of the substrate by 77% of the original length and width of the substrate, except in the masked region in the shape of "3M". The masked "3M" region was devoid of particles after removal of the mask.

## Claims

1. An article comprising a polymeric substrate having a first major surface comprising a plurality of two-dimensional particles attached thereto, said two-dimensional particles having a length, width, and thickness, wherein the width is not greater than the length, wherein the width is greater than the thickness, and wherein the length is at least two times the thickness, the plurality of particles having an outer surface and lengths greater than 1 micrometer, wherein for at least 50 percent by number of the particles there is at least 20 percent of the respective particle surface area consisting of points having tangential angles in a range from 5 to 175 degrees from the first major surface of the polymeric substrate, wherein the particles have thickness no greater than 300 nm.

2. The article of claim 1, wherein the particles are at least one of clay particles, graphite particles, boron nitride particles, carbon particles, molybdenum disulfide particles, or bismuth oxychloride particles.

3. The article of any preceding claim, wherein the particles have a largest dimension in a range from 1 micrometer to 50 micrometers.

4. The article of any preceding claim, wherein at least a portion of the outer surface of the respective particles has a coating thereon.

5. The article of any preceding claim, further comprising a tie layer disposed between the first major surface of the polymeric substrate and the plurality of particles.

6. The article of any preceding claim, wherein the particles are planar.

7. The article of claims 1 to 5, wherein the particles are non-planar.

8. The article of any preceding claim, wherein the particles each have a width and a thickness, and wherein the ratio of the particle width to the particle thickness is greater than 2:1.

9. An article comprising a polymeric substrate having a first major surface with a tie layer on the first major surface of the polymeric substrate and a plurality of two-dimensional particles attached to the tie layer, said two-dimensional particles having a length, width, and thickness, wherein the width is not greater than the length, wherein the width is greater than the thickness, and wherein the length is at least two times the thickness,, the particles each having an outer surface, wherein for at least 50 percent by number of the particles there is at least 20 percent of the respective particle surface area consisting of points having tangential angles in a range from 5 to 175 degrees from the first major surface of the polymeric substrate.

10. An article comprising a polymeric substrate having a first major surface comprising a plurality of at least one of two-dimensional clay particles, two-dimensional graphite particles, two-dimensional boron nitride particles, two-dimensional carbon particles, two-dimensional molybdenum disulfide particles, or two-dimensional bismuth oxychloride particles attached to the first major surface of the polymeric substrate, said two-dimensional particles having a length, width, and thickness, wherein the width is not greater than the length, wherein the width is greater than the thickness, and wherein the length is at least two times the thickness, the particles each having an outer surface, wherein for at least 50 percent by number of the particles there is at least 20 percent of the respective particle surface area consisting of points having tangential angles in a range from 5 to 175 degrees from the first major surface of the polymeric substrate.

11. A method of orienting particles, the method comprising:
applying a plurality of particles having an aspect ratio of at least greater than 2:1 to a major surface of a polymeric substrate to provide a coating on the major surface, the coating comprising the plurality of particles where the particles each independently have an acute angle from the major surface of the polymeric substrate; and
dimensionally relaxing the coated polymeric substrate, whereupon relaxing, at least 50 percent by number of the particles changing the acute angle away from the first major surface of the polymeric substrate by at least greater than 5 degrees.

12. The method of claim 11, wherein the coated polymeric substrate has an original length, and is dimensionally relaxed in at least one dimension by at least 20 percent of the original length.

13. The method of claim 11 or 12, wherein the particles are two-dimensional particles, said two-dimensional particles having a length, width, and thickness, wherein the width is not greater than the length, wherein the width is greater than the thickness, and wherein the length is at least two times the thickness and said particles each independently having at least one tangential angle from the major surface of the polymeric substrate; and
wherein the particles each having an outer surface, whereupon relaxing, for the at least 50 percent by number of the particles there is at least 20 percent of the respective particle surface area consisting of points having tangential angles changing at least greater than 5 degrees away from the major surface of the polymeric substrate.

## Patentansprüche

1. Gegenstand, umfassend ein Polymersubstrat mit einer ersten Hauptoberfläche, umfassend eine Vielzahl von zweidimensionalen Teilchen, die daran angelagert sind, wobei die zweidimensionalen Teilchen eine Länge, Breite und Dicke aufweisen, wobei die Breite nicht größer ist als die Länge, wobei die Breite größer ist als die Dicke, und wobei die Länge mindestens das Zweifache der Dicke beträgt, wobei die Vielzahl von Teilchen eine Außenoberfläche und Längen von mehr als 1 Mikrometer aufweisen, wobei für mindestens 50 Prozent der Anzahl der Teilchen mindestens 20 Prozent des jeweiligen Teilchenoberflächenbereichs aus Punkten besteht, die Tangentialwinkel in einem Bereich von 5 bis 175 Grad von der ersten Hauptoberfläche des Polymersubstrats aufweisen, wobei die Teilchen eine Dicke von nicht mehr als 300 nm aufweisen.

2. Gegenstand nach Anspruch 1, wobei die Teilchen mindestens eines von Tonteilchen, Graphitteilchen, Bornitridteilchen, Kohlenstoffteilchen, Molybdändisulfidteilchen oder Bismutoxychloridteilchen sind.

3. Gegenstand nach einem der vorstehenden Ansprüche, wobei die Teilchen eine größte Abmessung in einem Bereich von 1 Mikrometer bis 50 Mikrometer aufweisen.

4. Gegenstand nach einem der vorstehenden Ansprüche, wobei mindestens ein Abschnitt der Außenoberfläche der jeweiligen Teilchen eine Beschichtung darauf aufweist.

5. Gegenstand nach einem der vorstehenden Ansprüche, ferner umfassend eine Verbindungsschicht, die zwischen der ersten Hauptoberfläche des Polymersubstrats und der Vielzahl von Teilchen angeordnet ist.

6. Gegenstand nach einem der vorstehenden Ansprüche, wobei die Teilchen planar sind.

7. Gegenstand nach den Ansprüchen 1 bis 5, wobei die Teilchen nicht planar sind.

8. Gegenstand nach einem der vorstehenden Ansprüche, wobei die Teilchen jeweils eine Breite und eine Dicke aufweisen und wobei das Verhältnis der Teilchenbreite zur Teilchendicke größer als 2:1 ist.

9. Gegenstand, umfassend ein Polymersubstrat mit einer ersten Hauptoberfläche mit einer Verbindungsschicht auf der ersten Hauptoberfläche des Polymersubstrats und einer Vielzahl von zweidimensionalen Teilchen, die an die Verbindungsschicht angelagert sind, wobei die zweidimensionalen Teilchen eine Länge, Breite und Dicke aufweisen, wobei die Breite nicht größer ist als die Länge, wobei die Breite größer ist als die Dicke und wobei die Länge mindestens das Zweifache der Dicke beträgt, wobei die Teilchen jeweils eine Außenoberfläche aufweisen, wobei für mindestens 50 Prozent der Anzahl der Teilchen mindestens 20 Prozent des jeweiligen Teilchenoberflächenbereichs aus Punkten besteht, die Tangentialwinkel in einem Bereich von 5 bis 175 Grad von der ersten Hauptoberfläche des Polymersubstrats aufweisen.

10. Gegenstand, umfassend ein Polymersubstrat mit einer ersten Hauptoberfläche, umfassend eine Vielzahl von mindestens einem von zweidimensionalen Tonteilchen, zweidimensionalen Graphitteilchen, zweidimensionalen Bornitridteilchen zweidimensionalen Kohlenstoffteilchen, zweidimensionalen Molybdändisulfidteilchen oder zweidimensionalen Bismutoxychloridteilchen, die an die erste Hauptoberfläche des Polymersubstrats angelagert sind, wobei die zweidimensionalen Teilchen eine Länge, Breite und Dicke aufweisen, wobei die Breite nicht größer ist als die Länge, wobei die Breite größer ist als die Dicke und wobei die Länge mindestens das Zweifache der Dicke beträgt, wobei die Teilchen jeweils eine Außenoberfläche aufweisen, wobei für mindestens 50 Prozent der Anzahl der Teilchen mindestens 20 Prozent des jeweiligen Teilchenoberflächenbereichs aus Punkten besteht, die Tangentialwinkel in einem Bereich von 5 bis 175 Grad von der ersten Hauptoberfläche des Polymersubstrats aufweisen.

11. Verfahren zum Ausrichten von Teilchen, das Verfahren umfassend:
Aufbringen einer Vielzahl von Teilchen mit einem Seitenverhältnis von mindestens mehr als 2:1 auf eine Hauptoberfläche eines Polymersubstrats, um eine Beschichtung auf der Hauptoberfläche bereitzustellen, wobei die Beschichtung die Vielzahl von Teilchen umfasst, wo die Teilchen jeweils unabhängig einen spitzen Winkel von der Hauptoberfläche des Polymersubstrats aufweisen; und
dimensionales Entspannen des beschichteten Polymersubstrats, worauf beim Entspannen mindestens 50 Prozent der Anzahl der Teilchen den spitzen Winkel weg von der ersten Hauptoberfläche des Polymersubstrats weisend um mindestens mehr als 5 Grad ändern.

12. Verfahren nach Anspruch 11, wobei das beschichtete Polymersubstrat eine ursprüngliche Länge aufweist und in mindestens einer Abmessung um mindestens 20 Prozent der ursprünglichen Länge dimensional entspannt ist.

13. Verfahren nach Anspruch 11 oder 12, wobei die Teilchen zweidimensionale Teilchen sind, wobei die zweidimensionalen Teilchen eine Länge, Breite und Dicke aufweisen, wobei die Breite nicht größer ist als die Länge, wobei die Breite größer ist als die Dicke, und wobei die Länge mindestens das Zweifache der Dicke beträgt und die Teilchen jeweils unabhängig mindestens einen Tangentialwinkel von der Hauptoberfläche des Polymersubstrats aufweisen; und wobei die Teilchen jeweils eine Außenoberfläche aufweisen, worauf beim Entspannen für die mindestens 50 Prozent der Anzahl der Teilchen mindestens 20 Prozent des jeweiligen Teilchenoberflächenbereichs aus Punkten besteht, die Tangentialwinkel aufweisen, die sich weg von der Hauptoberfläche des Polymersubstrats weisend um mindestens mehr als 5 Grad ändern.

## Revendications

1. Article comprenant un substrat polymère ayant une première surface principale comprenant une pluralité de particules bidimensionnelles qui y sont fixées, lesdites particules bidimensionnelles ayant une longueur, une largeur et une épaisseur, dans lequel la largeur n'est pas supérieure à la longueur, dans lequel la largeur est supérieure à l'épaisseur et dans lequel la longueur est au moins deux fois l'épaisseur, la pluralité de particules ayant une surface externe et des longueurs supérieures à 1 micromètre, dans lequel pour au moins 50 pour cent des particules en nombre il y a au moins 20 pour cent de la superficie de particule respective constituée de points ayant des angles tangentiels dans une plage allant de 5 à 175 degrés à partir de la première surface principale du substrat polymère, dans lequel les particules ont une épaisseur qui n'est pas supérieure à 300 nm.

2. Article selon la revendication 1, dans lequel les particules sont au moins l'une de particules d'argile, de particules de graphite, de particules de nitrure de bore, de particules de carbone, de particules de disulfure de molybdène ou de particules d'oxychlorure de bismuth.

3. Article selon l'une quelconque des revendications précédentes, dans lequel les particules ont une dimension la plus grande dans une plage de 1 micromètre à 50 micromètres.

4. Article selon l'une quelconque des revendications précédentes, dans lequel au moins une partie de la surface externe des particules respectives a un revêtement sur celle-ci.

5. Article selon l'une quelconque des revendications précédentes, comprenant en outre une couche de liaison disposée entre la première surface principale du substrat polymère et la pluralité de particules.

6. Article selon l'une quelconque des revendications précédentes, dans lequel les particules sont planes.

7. Article selon les revendications 1 à 5, dans lequel les particules sont non planes.

8. Article selon l'une quelconque des revendications précédentes, dans lequel les particules ont chacune une largeur et une épaisseur et dans lequel le rapport de la largeur de particule à l'épaisseur de particule est supérieur à 2:1.

9. Article comprenant un substrat polymère ayant une première surface principale avec une couche de liaison sur la première surface principale du substrat polymère et une pluralité de particules bidimensionnelles fixées à la couche de liaison, lesdites particules bidimensionnelles ayant une longueur, une largeur et une épaisseur, dans lequel la largeur n'est pas supérieure à la longueur, dans lequel la largeur est supérieure à l'épaisseur et dans lequel la longueur est au moins deux fois l'épaisseur, les particules ayant chacune une surface externe, dans lequel pour au moins 50 pour cent des particules en nombre il y a au moins 20 pour cent de la superficie de particule respective constituée de points ayant des angles tangentiels dans une plage allant de 5 à 175 degrés à partir de la première surface principale du substrat polymère.

10. Article comprenant un substrat polymère ayant une première surface principale comprenant une pluralité d'au moins l'une de particules d'argile bidimensionnelles, de particules de graphite bidimensionnelles, de particules de nitrure de bore bidimensionnelles, de particules de carbone bidimensionnelles, de particules de disulfure de molybdène bidimensionnelles ou de particules d'oxychlorure de bismuth bidimensionnelles fixées à la première surface principale du substrat polymère, lesdites particules bidimensionnelles ayant une longueur, une largeur et une épaisseur, dans lequel la largeur n'est pas supérieure à la longueur, dans lequel la largeur est supérieure à l'épaisseur et dans lequel la longueur est au moins deux fois l'épaisseur, les particules ayant chacune une surface externe, dans lequel pour au moins 50 pour cent des particules en nombre il y a au moins 20 pour cent de la superficie de particule respective constituée de points ayant des angles tangentiels dans une plage allant de 5 à 175 degrés à partir de la première surface principale du substrat polymère.

11. Procédé d'orientation de particules, le procédé comprenant :
l'application d'une pluralité de particules ayant un rapport d'aspect au moins supérieur à 2:1 sur une surface principale d'un substrat polymère pour fournir un revêtement sur la surface principale, le revêtement comprenant la pluralité de particules où les particules ont chacune indépendamment un angle aigu par rapport à la surface principale du substrat polymère ; et le relâchement dimensionnel du substrat polymère revêtu, après quoi au moins 50 pour cent en nombre des particules changent l'angle aigu en s'écartant de la première surface principale du substrat polymère d'au moins plus de 5 degrés.

12. Procédé selon la revendication 11, dans lequel le substrat polymère revêtu a une longueur d'origine et est relâché dimensionnellement dans au moins une dimension d'au moins 20 pour cent de la longueur d'origine.

13. Procédé selon la revendication 11 ou 12, dans lequel les particules sont des particules bidimensionnelles, lesdites particules bidimensionnelles ayant une longueur, une largeur et une épaisseur, dans lequel la largeur n'est pas supérieure à la longueur, dans lequel la largeur est supérieure à l'épaisseur et dans lequel la longueur est au moins deux fois l'épaisseur et lesdites particules ayant chacune indépendamment au moins un angle tangentiel par rapport à la surface principale du substrat polymère ; et dans lequel les particules ont chacune une surface externe, moyennant quoi après le relâchement pour au moins 50 pour cent en nombre des particules il y a au moins 20 pour cent de la superficie de particule respective constituée de points ayant des angles tangentiels changeant d'au moins plus de 5 degrés en s'écartant de la surface principale du substrat polymère.
